Europäisches Patentamt

European Patent Office

Office européen des brevets

(11) Publication number: **0 137 275**
**B1**

(12) **EUROPEAN PATENT SPECIFICATION**

(45) Date of publication of patent specification: 03.05.89

(51) Int. Cl.⁴: **F 16 K 17/00,** F 16 K 17/04

(21) Application number: 84110229.6

(22) Date of filing: 28.08.84

(54) Flow control valve.

(30) Priority: 29.08.83 JP 133320/83 u
16.09.83 JP 143459/83 u

(43) Date of publication of application:
17.04.85 Bulletin 85/16

(45) Publication of the grant of the patent:
03.05.89 Bulletin 89/18

(84) Designated Contracting States:
BE DE FR GB

(56) References cited:
FR-A-1 136 492
GB-A-1 474 686
US-A-2 870 781
US-A-3 426 785
US-A-3 896 845
US-A-4 017 221
US-A-4 343 324

(73) Proprietor: **Shin Caterpillar Mitsubishi Ltd.**
**2-3 Kita Aoyama 1-chome**
**Minato-ku Tokyo (JP)**

(72) Inventor: **Nakamura, Akira**
**5-7-9 Minami Karasuyama**
**Setagaya-ku Tokyo (JP)**
Inventor: **Asao, Shunji**
**1-3-236 Yokoyama**
**Sagamihara-shi Kanagawa-ken (JP)**
Inventor: **Ito, Yoshiyuki**
**2240-3 Oshima**
**Sagamihara-shi Kanagawa-ken (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

Courier Press, Leamington Spa, England.

## Description

### FIELD OF THE INVENTION

This invention relates to a flow control valve of the kind referred to in the pre-characterizing part of patent claim 1. Such a flow control valve is known from US-A-3,426,785.

### DESCRIPTION OF THE PRIOR ART

A fixed displacement pump which is simpler in structure and less expensive than a variable displacement pump is generally used as an oil supply source for hydraulic systems of construction machinery, etc. The amount of pumping of the fixed displacement pump varies considerably according to its rotating speed, and therefore the rotating speed of a driving source. It is important therefore to dispose between the fixed displacement pump and an actuator, such as a hydraulic cylinder, a flow control valve which compensates for the variations in the amount of pumping of the fixed displacement pump. It is also important that the hydraulic systems of construction machinery, etc. should also be equipped with means for relieving overload. Generally, therefore, a flow control valve equipped with an overload relief valve means is disposed between the fixed displacement pump and the actuator in the hydraulic systems of the construction machinery and the like.

A valve of the type comprising spool means for compensating for the variations in the amount of pumping of a fixed displacement pump and uniformizing the flow rate of an oil to be fed to the actuator and an overload relief valve means built in the spool means is conveniently used as the flow control valve equipped with an overload relief valve means. Generally, the overload relief valve means is of the poppet type.

The conventional flow control valve of the above type equipped with an overload relief valve means has the following problems or defects to be solved or eliminated.

Firstly, construction machinery or the like is frequently used in a polluted atmosphere containing sand, dust, etc., and it is not uncommon that foreign materials such as sand and dust get mixed with the hydraulic oil used in the hydraulic systems. If the oil containing such foreign materials flows through the open overload relief valve means, the foreign materials adhere to the constituent elements of the relief valve means such as a valve seat member and a poppet. Consequently, the relief pressure of the overload relief valve means is varied, and the relieving action becomes unstable. It is necessary therefore to remove the spool means having the built-in overload relief valve means at regular intervals for disassembling and cleaning.

Secondly, the oil flowing through the open overload relief valve means frequently pulsates. In such a case, the movable constituent element such as the poppet of the overload relief valve means undergoes vibration by the pulsating flow of the hydraulic oil, and therefore, the relieving action of the valve means becomes unstable.

The flow control valve known from US-A-3,426,785 comprises:

A flow control valve comprising

a valve body,

a bore formed in the valve body with at least one end being open,

a first plug means detachably mounted on said one end of the bore for closing said one end, spool means slidably received in the bore, one side of the spool means within the bore defining a first oil chamber, the other side thereof within the bore defining a second oil chamber, and the intermediate surrounding part of the spool means defining a drain chamber,

limiting means for limiting the movement of the spool means toward the first oil chamber to a predetermined position,

differential pressure prescribing spring means for elastically biasing the spool means toward the first oil chamber,

an influent passage formed in the valve body extending from an oil influent opening to the first oil chamber,

an effluent passage formed in the valve body extending from the first oil chamber toward an oil effluent opening and including a differential pressure generating orifice,

a differential pressure passage formed in the valve body extending from that part of the effluent passage which is downstream of the differential pressure generating orifice to the second oil chamber,

a drain passage formed in the valve body extending from the drain chamber to a drain opening,

a relief passage formed in the spool means for communicating the second oil chamber with the drain chamber,

overload relief valve means disposed in the relief passage,

the spool means being movable toward said one end of the bore against the elastic biasing action of the differential pressure prescribing spring means when the difference between the pressure of the oil in the first oil chamber and that of the oil in the second oil chamber exceeds a predetermined amount, whereby the first oil chamber is caused to communicate with the drain chamber,

the relief valve means being openable when the pressure of the oil in the second oil chamber exceeds a predetermined relief value, whereby the second oil chamber is caused to communicate with the drain chamber through the relief passage, and

a filter for covering the upstream end of the relief passage.

### SUMMARY OF THE INVENTION

It is a primary object of this invention to provide an improved flow control valve equipped with an overload relief valve means, which obviates the need for disassembling and cleaning the spool means having a built-in overload relief valve means, and enables the required relieving action to be performed by very simple part replacement or cleaning.

This object is achieved according to the invention with the features disclosed in claim 1.

The present inventors made extensive research and experimental works and have found that when a filter is provided to cover the upstream end of a relief passage formed in the spool means, the hydraulic oil flowing into the relief passage goes through the filter which removes the foreign materials in the oil so that the adhesion of the foreign materials to the constituent elements of the overload relief valve means can be surely prevented, and that when the hydraulic oil flowing into the relief passage passes through the filter, its pulsation is inhibited or eliminated.

Other objects of this invention will become apparent from the following detailed description given with reference to the accompanying drawings.

BRIEF DESCRIPTION OF THE DRAWINGS

Figure 1 is a sectional view showing one embodiment of the flow control valve constructed in accordance with this invention.

Figure 2 is a partial sectional view showing a modification of a filter and the manner of its mounting.

DETAILED DESCRIPTION OF PREFERRED EMBODIMENTS

With reference to the accompanying drawings, specific embodiments of the flow control valve equipped with an overload relief valve means constructed in accordance with this invention will be described in detail.

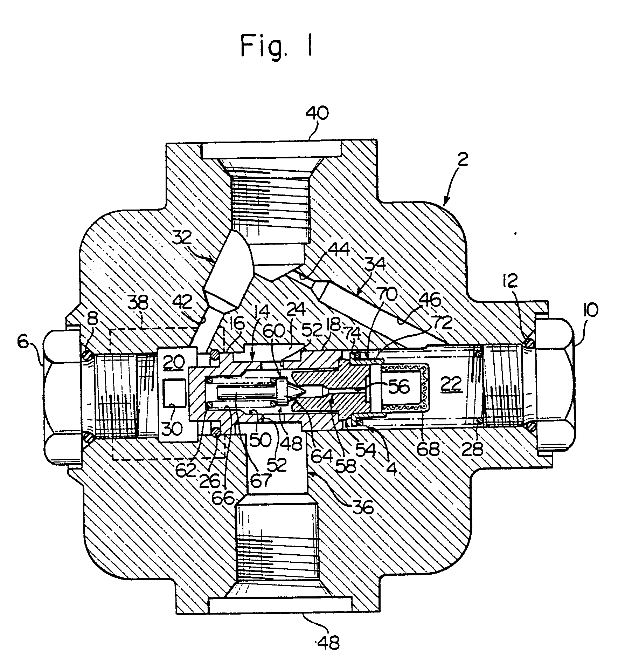

With reference to Figure 1, the flow control valve shown has a valve body 2 which may be nearly rectangular. A bore 4 extending in the left-right direction in Figure 1 is formed in the valve body 2. Preferably, the bore 4 extends through the valve body 2, and therefore opens at the left surface of the valve body 2 at one end and at the right surface of the valve body 2 at the other end. An internal thread is formed on the inside surface of one end portion of the bore 4, and a nut-type plug means 6 is screwably received by the one end portion. Thus, one end of the bore 4 is closed. A seal ring 8 is disposed between one end portion of the bore 4 and the plug means 6. Likewise, an internal thread is formed on the inner surface of the other end portion of the bore 4, and a nut-type plug means 10 is screwably received by the other end portion. Thus, the other end of the bore 4 is closed. A seal ring 12 is disposed between the other end portion of the bore 4 and the plug means 10.

Spool means 14 in the form of a valve spool is slidably received in the bore 4. Two lands 16 and 18 spaced from each other in the longitudinal direction (i.e., the left-right direction in Figure 1) are formed on the peripheral surface of the spool means 14. Thus, the inside of the bore 4 is divided into a first oil chamber 20 defined on the left side of the spool means 14, or more specifically on the left of the land 16, a second oil chamber 22 defined on the right side of the spool means 14, or more specifically on the right of the land 18, and a drain chamber 24 defined between the differential pressure generating orifice 42 which is disposed in the upstream end portion of the effluent passage 32 and has a relatively small diameter. The differential pressure passage 34 extends from that part of the effluent passage 32 which is downstream of the differential pressure generating orifice 42 to the second oil chamber 22. The differential pressure passage 34 has an upstream portion 44 having a relatively small diameter and a downstream portion 46 having a relatively large diameter. The drain passage 36 extends from the drain chamber 24 to a drain opening 48 opened to the undersurface of the valve body 2.

On the other hand, a relief passage for bringing the second oil chamber 22 into communication with the drain chamber 24 is formed in the spool means 14, and an overload relief valve means 48 is disposed in the relief passage. In the illustrated embodiment, a longitudinal hole 50 is formed in the spool means 14 extending from its right end toward the left over a predetermined length. Furthermore, a plurality of radial holes 52 extending radially and connecting the longitudinal hole 50 to the drain chamber 24 are formed. The longitudinal hole 50 and the radial holes 52 constitute the relief passage. The overload relief valve means 48 is constructed of a poppet-type relief valve disposed in the longitudinal hole 50. More specifically, an internal thread is formed on the inner circumferential surface of the open end portion (i.e., the right end portion) of the longitudinal hole 50, and a valve seat member 54 is received in the open end portion. The valve seat member 54 has formed therein a longitudinal through-hole 58 including a portion 56 having a sufficiently small cross-sectional area of, for example, about 0.3 to about 0.5 mm$^2$. On the left of the valve seat member 54 are disposed a poppet 60 and a compression coil spring 62. The coil spring 62 is disposed between the bottom surface of the longitudinal hole 50 and an annular flange portion 64 of the poppet 60. The poppet 60 is elastically biased to the right to press its tip against the valve seat member 54 under a predetermined relief pressure and thus the through-hole 58 formed in the valve seat member 54 is closed. The rear end portion 66 of the longitudinal hole 50 is made slightly smaller in diameter than the other portions, and is substantially the same as the outside diameter of the coil spring 62. The outside diameter of a shaft portion 67 of the poppet 60 is made substantially the same as that of the coil spring 62. Thus, the vibration of the coil spring 62 in the radial direction is inhibited as a result of being restrained by the longitudinal rear end portion 66 and the vibration of the poppet 60 in the radial direction is inhibited as a result of being restrained by the coil spring 62.

It is critical that in the flow control valve constructed in accordance with this invention, a filter 68 is provided which covers the upstream end of the relief passage, and therefore the upstream end of the through-hole 58 formed in the valve seat member 54. Preferably, the filter 68 is disposed between the coil spring 28 and the spool means 14 so that it is maintained in a predetermined relation relative to the spool means 14 by the elastic biasing action of the coil spring 28. In the illustrated embodiment retaining means in the form of a spring receiving member 70 is mounted on the front end portion, i.e. the left end portion, of the coil spring 28 for retaining the coil spring 28 in a predetermined relation relative to the spool means 14. The spring receiving member 70 has a cylindrical portion 72 and an outside annular flange portion 74 protruding radially outwardly from the front end of the cylindrical portion 72. The outside diameter of the cylindrical portion is substantially the same as, or slightly greater than, the inside diameter of the coil spring 28. The spring receiving member 70 is mounted on the coil spring 28 by forcedly inserting the cylindrical portion 72 into the coil spring 28 until the rear surface of the outside annular flange portion 74 makes contact with the front end of the coil spring 28. As a result, the spring receiving member 70 is elastically held at the front end portion of the coil spring 28. The filter 68 is cup-shaped, and the outside surface of its open end portion is fixed to the inner surface of the cylindrical portion 72 of the spring receiving member 70 by a suitable method, for example by welding or bonding. The filter 68 may be formed of such a material as a multilayer wire gauze having a rated filtration of 150 to 200 μm. The elastic biasing action of the coil spring 28 urges the spring receiving member 70 into abutment against the valve seat member 54 fixed to the spool means 14, and the filter 68 is maintained in a predetermined relation to the valve seat member 54.

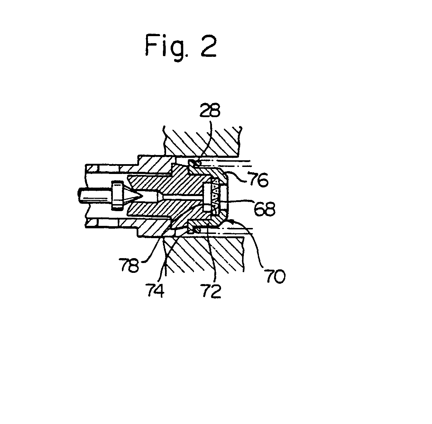

Figure 2 shows a modification of the spring receiving member 70 and the filter 68. In the modification shown in Figure 2, the spring receiving member 70 has an inside annular flange 76 of a relatively large thickness protruding radially inwardly from the rear end, i.e. the right end, of the cylindrical portion 72 in addition to the cylindrical portion 72 and the outside annular flange portion 74. An annular depression 78 is formed on the front surface, i.e. the left surface, of the inside annular flange 76. The filter 68 is of a disc-like shape having an outside diameter substantially the same as, or slightly greater than, the inside diameter of the annular depression 78. The filter 68 is mounted on the spring receiving member 70 by being forced into the annular depression 78.

The operation of the flow control valve described hereinabove will now be described.

The oil influent opening 38 is connnected to an exhaust port of a fixed displacement pump (not shown) through a suitable pipeline, and the oil effluent opening 40 is connected to an actuator (not shown) such as a hydraulic cylinder through a suitable pipeline. The drain opening 48 is connected to a reservoir (not shown) through a suitable pipeline. As a result, a hydraulic oil discharged from the fixed displacement pump flows into the first oil chamber 20 through the influent passage 30, and then fed to the actuator through the effluent passage 32. When the rotating speed of the fixed displacement pump increases and therefore the flow rate of the oil discharged from the fixed displacement pump increases, the flow rate of the oil passing through the effluent passage 32 increases. As a result, the pressure drop increases in the differential pressure generating orifice 42 of the effluent passage 32, and therefore, the differential pressure ($\triangle P = P1 - P2$) between the pressure (P1) of the oil in the first oil chamber 20 and the pressure (P2) of the oil in the second oil chamber 22 increases. When the differential pressure ($\triangle P = P1 - P2$) exceeds a predetermined value set by the differential pressure prescribing coil spring 28, the differential pressure causes the spool means 14 to move to the right in Figure 1 against the elastic biasing action of the coil spring 28. Consequently, the land 16 of the spool means 14 is moved to the drain chamber 24 and the first oil chamber 20 communicates with the drain chamber 24. Hence, the excess of the oil which has flowed into the first oil chamber 20 from the fixed displacement pump flows into the drain chamber 24, and from the drain chamber 24, is returned to the reservoir through the drain passage 36. The flow rate of the oil fed to the actuator is therefore maintained at a predetermined value.

On the other hand, when the pressure on the actuator increases, the pressure P2 of the oil in the second oil chamber 22 increases because the second oil chamber 22 communicates with the actuator through the effluent passage 32 and the differential pressure passage 34. When the oil pressure P2 of the second oil chamber 22 exceeds the relief pressure defined by the coil spring 62 of the overload relief valve means 48, the poppet 60 is moved to the left in Figure 1 against the elastic biasing action of the coil spring 62, and the relief valve means 48 is opened. As a result, the oil is returned to the reservoir from the second oil chamber 22 via the relief valve means 48, the drain chamber 24 and the drain passage 36, and the overload is thus relieved.

The flow control valve constructed in accordance with this invention has the filter 68 described above, and the hydraulic oil flowing into the relief valve means 48 goes through the filter 68. Accordingly, any foreign materials such as sand and dust which may be present in the oil are removed from it through the filter 68. It is possible therefore to prevent the adhesion of the foreign meterials to the valve seat member 54 and the poppet 60 of the relief valve means 48 and the exertion of the consequent adverse effects on the action of the relief valve means 48. Furthermore, as a result of the oil passing through the filter 68, its pulsation is inhibited or eliminated. It is possible therefore to avoid the unstable relieving action of the relief valve means 48 ascribed to the pulsation of the oil. The inhibition and elimination of the pulsation of the oil are also facilitated by the passing of the oil through the portion 56 of a sufficiently small cross-sectional area in the through-hole 58 formed in the valve seat member 54.

When the filter 68 is blocked up after long use, the plug means 10 is detached, and the coil spring 28 and the spring receiving member 70 and the filter 68 mounted thereon are taken out. The filter 68 is washed, or the filter 68 or both the filter 68 and the spring receiving member 70 are replaced with new ones.

## Claims

1. A flow control valve comprising
a valve body (2),
a bore (4) formed in the valve body (2) with at least one end being open,
a first plug means (6) detachably mounted on said one end of the bore (4) for closing said one end,
spool means (14) slidably received in the bore (4), one side of the spool means (14) within the bore defining a first oil chamber (20), the other side thereof within the bore defining a second oil chamber (22), and the intermediate surrounding part of the spool means defining a drain chamber (24),
limiting means (26) for limiting the movement of the spool means (14) toward the first oil chamber (20) to a predetermined position,
differential pressure prescribing spring means (28) for elastically biasing the spool means (14) toward the first oil chamber (20),
an influent passage (30) formed in the valve body (2) extending from an oil influent opening (38) to the first oil chamber (20),
an effluent passage (32) formed in the valve body (2) extending from the first oil chamber (20) toward an oil effluent opening (40) and including a differential pressure generating orifice (42),
a differential pressure passage (34) formed in the valve body extending from that part of the effluent passage (32) which is downstream of the differential pressure generating orifice (42) to the second oil chamber (22),
a drain passage (36) formed in the valve body (2) extending from the drain chamber (24) to a drain opening (48),
a relief passage (50, 52) formed in the spool means (14) for communicating the second oil chamber (22) with the drain chamber (24),
overload relief valve means (48) disposed in the relief passage,
the spool means (14) being movable toward said one end of the bore (4) against the elastic biasing action of the differential pressure prescribing spring means (28) when the difference between the pressure of the oil in the first oil chamber (20) and that of the oil in the second oil chamber (22) exceeds a predetermined amount, whereby the first oil chamber (20) is caused to communicate with the drain chamber (24),
the relief valve means (48) being openable when the pressure of the oil in the second oil chamber (22) exceeds a predetermined relief value, whereby the second oil chamber (22) is caused to communicate with the drain chamber (24) through the relief passage, and
a filter (68) for covering the upstream end of the relief passage,
characterized in that
the filter (68) is disposed between the differential pressure prescribing spring means (28) and the spool means (14) is facing a second detachable plug means (10), provided on the other end of said bore (4) maintained in a predetermined relation to the spool means (14) by the elastic biasing action of the differential pressure prescribing spring means (28) and is disposed upstream of a part (56) of said relief passage having a through-hole (58) with a cross-sectional area sufficiently small for inhibiting the pulsation of a hydraulic oil flowing therethrough.

2. The flow control valve of claim 1 wherein the relief passage (50, 52) is composed of a longitudinal hole (50) extending longitudinally in the spool means (14) from its open end and opening into the second oil chamber (22), and at least one radial hole (52) extending radially from said longitudinal hole (50), and
the relief valve means (48) is comprised of a valve seat member (54) mounted on the open end of the longitudinal hole (50) and having a longitudinal passage (58) formed therein, a poppet (60) received in the longitudinal hole (50) for free movement therein in the longitudinal direction, and a relief pressure prescribing spring means (62) for pressing the poppet (60) elastically against the valve seat member (54).

3. The flow control valve of claim 1 wherein the differential pressure prescribing spring means (28) is composed of a coil spring (28) interposed between the plug means (10) and the spool means (14), and
a spring receiving member (70) abutting against the spool means (14) at the front end portion of the coil spring (28), the filter (68) being mounted on the spring receiving member (70).

4. The flow control valve of claim 3 wherein the spring receiving member (70) has a cylindrical portion (72) adapted to be inserted forcibly into the coil spring (28) and an outside annular flange portion (74) which protrudes radially outwardly from the rear end of the cylindrical portion (72) and whose rear surface contacts the front end of the coil spring (28), and the filter (68) has a cupshape whose open end portion is fixed at its outside surface to the inner surface of the cylindrical portion (72).

5. The flow control valve of claim 3 wherein the spring receiving member (70) has a cylindrical portion (72) adapted to be inserted forcibly into the coil spring (28), an outside annular flange (74) which protrudes radially outwardly from the front end of the cylindrical portion (72) and whose rear surface is adapted to make contact with the front end of the coil spring (28), and an inside annular flange (76) protruding radially inwardly from the rear end of the cylindrical portion (72); an annular depression (78) is formed on the front surface of the inner annular flange (76); and the filter (68) is of a disc-like shape adapted to be forced into the annular depression (78).

6. The flow control valve of claim 1 wherein the filter (68) is formed of a multilayer wire gauze.

## Patentansprüche

1. Durchflußregelventil, umfassend
einen Ventilkörper (2),
eine im Ventilkörper (2) ausgebildete Bohrung (4) mit wenigstens einem offenen Ende,
einen ersten Stopfen (6), der an diesem einen Ende der Bohrung (4) zum Verschließen dieses Endes lösbar befestigt ist,
einen Schieber (14), der verschiebbar in der Bohrung (4) aufgenommen ist, wobei eine Seite des Schiebers (14) innerhalb der Bohrung eine erste Ölkammer (20) begrenzt, die andere Seite des Schiebers innerhalb der Bohrung eine zweite Ölkammer (22) begrenzt und der umgebende Zwischenabschnitt des Schiebers eine Ablaufkammer (24) begrenzt, ein Begrenzungselement (26), das die Bewegung des Schiebers (14) in Richtung zur ersten Ölkammer (20) auf eine vorbestimmte Stellung begrenzt,
eine Druckdifferenz-Vorgabefeder (28), die den Schieber (14) elastisch in Richtung zur ersten Kammer (20) beaufschlagt,
einen im Ventilkörper (2) ausgebildeten Zuflußkanal (30), der von einer Ölzuflußöffnung (38) zur ersten Ölkammer (20) verläuft,
einen im Ventilkörper (2) ausgebildeten Abflußkanal (32), der von der ersten Ölkammer (20) zu einer Ölablauföffnung (40) verläuft und eine Differenzdruckerzeugungsblende aufweist,
einen im Ventilkörper ausgebildeten Differenzdruckkanal (34), der von dem abstrom der Differenzdruckerzeugungsblende (42) befindlichen Teil des Ablaufkanals (32) zur zweiten Ölkammer (22) verläuft,
einen im Ventilkörper (2) ausgebildeten Ablaufkanal (36), der von der Ablaufkammer (24) zu einer Ablauföffnung (48) verläuft,
einen im Schieber (14) ausgebildeten Entlastungskanal (50, 52), der die zweite Ölkammer (22) mit der Ablaufkammer (24) verbindet,
ein im Entlastungskanal angeordnetes Überlastschutzventil (48), wobei der Schieber (14) gegen die federnde Vorspannung der Differenzdruck-Vorgabefeder (28) in Richtung zu dem einen Ende der Bohrung (4) verschiebbar ist, wenn die Differenz zwischen dem Öldruck in der ersten Ölkammer (20) und dem Öldruck in der zweiten Ölkammer (22) einen vorbestimmten Wert übersteigt, so daß die erste Ölkammer (20) mit der Ablaufkammer (24) in Verbindung gebracht wird,
wobei das Überlastschutzventil (48) geöffnet wird, wenn der Öldruck in der zweiten Ölkammer (22) einen vorbestimmten Überdruck übersteigt, so daß die zweite Ölkammer (22) durch den Entlastungskanal mit der Ablaufkammer (24) in Verbindung gebracht wird, und
einen Filter (68), der das Aufstromende des Entlastungskanals überdeckt,
dadurch gekennzeichnet,
daß der Filter (68) zwischen der Differenzdruck-Vorgabefeder (28) und dem Schieber (14) angeordnet und einem zweiten lösbaren Stopfen (10) zugewandt ist, der am anderen Ende der Bohrung (4) vorgesehen und in vorbestimmter Beziehung zu dem Schieber (14) durch die elastische Vorspannungskraft der Differenzdruck-Vorgabefeder (28) gehalten und aufstrom von einem Teil (56) des Entlastungskanals angeordnet ist, der eine Durchgangsbohrung (58) aufweist, deren Bohrungsquerschnitt hinreichend klein ist, um eine Pulsation eines sie durchströmenden Hydrauliköls auszuschließen.

2. Durchflußregelventil nach Anspruch 1, wobei der Entlastungskanal (50, 52) aus einer Längsbohrung (50), die den Schieber (14) in Längsrichtung ausgehend von dessen offenem Ende durchsetzt und in die zweite Ölkammer (22) mündet, und wenigstens einer Radialbohrung (52), die von der Längsbohrung (50) in Radialrichtung ausgeht, gebildet ist, und wobei das Überlastschutzventil (48) umfaßt ein Ventilsitzorgan (54), das am offenen Ende der Längsbohrung (50) angeordnet ist und im Inneren einen Längskanal (58) aufweist, einen in der Längsbohrung (50) aufgenommenen und darin in Längsrichtung frei bewegbaren Ventilkegel (60) und eine Überdruckvorgabefeder (62), die den Ventilkegel (60) elastisch gegen das Ventilsitzorgan (54) preßt.

3. Durchflußregelventil nach Anspruch 1, wobei die Differenzdruck-Vorgabefeder (28) besteht aus einer Schraubenfeder (28), die zwischen dem Stopfen (10) und dem Schieber (14) angeordnet ist, und einem Federaufnahmeelement (70), das an dem Schieber (14) am Vorderende der Schraubenfeder (28) anliegt, wobei der Filter (68) an dem Federaufnahmeelement (70) befestigt ist.

4. Durchflußregelventil nach Anspruch 3, wobei das Federaufnahmeelement (70) einen zylindrischen Abschnitt (72), der in die Schraubenfeder (28) einpreßbar ist, und einen äußeren Ringflansch (74), der vom hinteren Ende des zylindrischen Abschnitts (72) nach radial außen vorspringt und dessen rückwärtige Fläche das Vorderende der Schraubenfeder (28) kontaktiert, aufweist, und wobei der Filter (68) Becherform hat, deren offener Endabschnitt mit seiner Außenseite an der Innenseite des zylindrischen Abschnitts (72) festgelegt ist.

5. Durchflußregelventil nach Anspruch 3, wobei das Federaufnahmeelement (70) einen zylindrischen Abschnitt (72), der in die Schraubenfeder (28) einpreßbar ist, einen äußeren Ringflansch (74), der vom Vorderende des zylindrischen Abschnitts (72) nach radial außen vorspringt und dessen rückwärtige Fläche in Kontakt mit dem Vorderende der Schraubenfeder (28) bringbar ist, und einen inneren Ringflansch (76), der vom rückwärtigen Ende des zylindrischen Abschnitts (72) nach radial innen vorsteht, aufweist; wobei an der Vorderfläche des inneren Ringflanschs (76) eine ringförmige Vertiefung (78) ausgebildet ist; und wobei der Filter (68) Scheibenform hat, die in die ringförmige Vertiefung (78) einpreßbar ist.

6. Durchflußregelventil nach Anspruch 1, wobei der Filter (68) aus einem Viellagen-Siebgewebe besteht.

## Revendications

1. Une soupape de réglage de débit comprenant

un corps de soupape (2),

un alésage (4) formé dans le corps de soupape (2) avec au moins une extrémité étant ouverte,

un premier moyen de bouchon (6) monté amovible dans ladite première extrémité de l'alésage (4) pour fermer ladite première extrémité,

des moyens de bobine (14) reçus à coulissement dans l'alésage (4), une face des moyens de bobine (14) à l'intérieur de l'alésage définissant une première chambre d'huile (20), son autre face à l'intérieur de l'alésage définissant une seconde chambre d'huile (22), et la partie intermédiaire entourante des moyens de bobine définissant une chambre de drainage (24),

des moyens de limitation (26) pour limiter le mouvement des moyens de bobine (14) vers la première chambre d'huile (20) à une position prédéterminée,

des moyens de ressort (28) imposant une pression différentielle pour rappeler élastiquement le moyen de bobine (14) vers la première chambre d'huile (20),

un passage affluent (30) formé dans le corps de soupape (2) s'étendant depuis une ouverture d'affluence d'huile (38) jusqu'à la première chambre d'huile (20),

un passage de sortie (32) formé dans le corps de soupape (2) s'étendant depuis la première chambre d'huile (20) vers une ouverture de sortie d'huile (40) et comprenant un orifice générateur de pression différentielle (42),

un passage de pression différentielle (34) formé dans le corps de soupape s'étendant depuis la partie du passage de sortie (32) qui est en aval de l'orifice générateur de pression différentielle (42) jusqu'à la seconde chambre d'huile (22),

un passage de drainage (36) formé dans le corps de soupape (2) s'étendant depuis la chambre de drainage (24) jusqu'à une ouverture de drainage (48),

un passage d'allègement (50, 52) formé dans les moyens de bobine (14) pour faire communiquer la seconde chambre d'huile (22) avec la chambre de drainage (24),

des moyens de soupape d'allègement de surcharge (48) disposés dans le passage d'allègement,

les moyens de bobine (14) étant mobiles vers ladite première extrémité de l'alésage (4) contre l'action de rappel élastique des moyens de ressort imposant une pression différentielle (28) lorsque la différence entre la pression d'huile dans la première chambre d'huile (20) et celle de l'huile dans la seconde chambre d'huile (22) dépasse une valeur prédéterminée, grâce à quoi la première chambre d'huile (20) est mise en communication avec la chambre de drainage (24),

les moyens de soupape d'allègement (48) pouvant être ouverts lorsque la pression de l'huile dans la seconde chambre d'huile (22) dépasse une valeur d'allègement prédéterminée, grâce à quoi la seconde chambre d'huile (22) est mise en communication avec la chambre de drainage (24) à travers le passage d'allègement, et

un filtre (68) pour couvrir l'extrémité amont du passage d'allègement, caractérisée en ce que

le filtre (68) est disposé entre les moyens de ressort (28) imposant une pression différentielle et les moyens de bobine (14) sont en face d'un second moyen de bouchon amovible (4) prévu sur l'autre extrémité dudit alésage (4) maintenu dans une relation prédéterminée par rapport aux moyens de bobine (14) par l'action de rappel élastique des moyens de ressort (28) imposant une pression différentielle et est disposé en amont d'une partie (56) dudit passage d'allègement ayant un trou traversant (58) avec une surface de section transversale suffisamment faible pour empêcher la vibration d'une huile hydraulique s'écoulant à travers lui.

2. La soupape de réglage du débit de la revendication 1, dans laquelle le passage d'allègement (50, 52) est constitué par un trou longitudinal (50) s'étendant longitudinalement dans le moyen de bobine (14) depuis son extrémité ouverte et débouchant dans la seconde chambre d'huile (22), et au moins un trou radial (52) s'étendant radialement depuis ledit trou longitudinal (50), et

le moyen d'allègement (48) est constitué par un organe de siège de soupape (54) monté sur l'extrémité ouverte du trou longitudinal (50) et ayant un passage longitudinal (58) formé dedans, un manchon (60) reçu dans le trou longitudinal (50) à mouvement libre dedans dans la direction longitudinale, et un moyen de ressort imposant la pression d'allègement (62) pour comprimer élastiquement le manchon (60) contre l'organe de siège de soupape (54).

3. La soupape de réglage du débit de la revendication 1, dans laquelle le moyen de ressort imposant la pression différentielle (28) est composé d'un ressort hélicoïdal (28) interposé entre le moyen de bouchon (10) et le moyen de bobine (14), et

un organe récepteur de ressort (70) butant contre le moyen de bobine (14) à la portion d'extrémité frontale du ressort hélicoïdal (28), le filtre (68) étant monté sur l'organe récepteur de ressort (70).

4. La soupape de réglage du débit de la revendication 3, dans laquelle l'organe de réception de ressort (70) a une portion cylindrique (72) adaptée pour être insérée à force dans le ressort hélicoïdal (28) et une portion de collerette annulaire extérieure (74) qui fait saillie radialement vers l'extérieur depuis l'extrémité arrière de la portion cylindrique (72) et dont la surface arrière est en contact avec l'extrémité frontale du ressort hélicoïdal (28), et le filtre (68) a une forme de coupe dont la portion d'extrémité ouverte est fixée à sa surface extérieure à la surface intérieure de la portion cylindrique (72).

5. La soupape de réglage du débit de la revendication 3, dans laquelle l'organe récepteur de ressort (70) a une portion cylindrique (72) adaptée pour être insérée à force dans le ressort hélicoïdal (28), une collerette annulaire extérieure (74) qui fait saillie radialement vers l'extérieur depuis l'extrémité frontale de la portion cylindrique (72) et dont la surface arrière est adaptée pour faire contact avec l'extrémité frontale du ressort hélicoïdal (28), et une collerette annulaire intérieure (76) faisant saillie radialement vers l'intérieur depuis l'extrémité arrière de la portion cylindrique (72); une cuvette annulaire (78) est formée sur la surface frontale de la collerette annulaire intérieure (76), et le filtre (68) a une forme ressemblant à un disque adaptée pour être forcée dans la cuvette annulaire (78).

6. La soupape de réglage du débit de la revendication 1, dans laquelle le filtre (68) est formé d'une gaze de fil métallique multicouches.

# Fig. I

Fig. 2